# FASCICULE DE BREVET EUROPEEN

(11) **EP 1 856 400 B1**
(45) Date de publication et mention de la délivrance du brevet: **23.11.2011**
(21) Numéro de dépôt: 06726044.8
(22) Date de dépôt: 08.03.2006
(51) Int. Cl.: F02M 25/07, F16K 31/04, F16K 3/10, F16K 11/074

(54) **DISPOSITIF DE RECIRCULATION DE GAZ D'ECHAPPEMENT COMPORTANT UNE VANNE AYANT UN ELEMENT DE REGULATION DECOLLABLE DE SON SIEGE**
EIN VENTIL MIT EINEM VON SEINEM SITZ ABHEBBAREN ELEMENT AUFWEISENDE ABGASRÜCKFÜHRVORRICHTUNG
EXHAUST GAS RECIRCULATION DEVICE HAVING A VALVE WITH A CONTROL ELEMENT LIFTABLE FROM ITS SEAT

(30) Priorité: 09.03.2005 FR 0502348
(43) Date de publication de la demande: 21.11.2007
(73) Titulaire: Valeo Systèmes de Contrôle Moteur, 95800 Cergy Saint Christophe (FR)
(72) Inventeur: ALBERT, Laurent, 60640 Verderie (FR)
(74) Mandataire: Rolland, Jean-Christophe
(86) Numéro de dépôt international: PCT/FR2006/000513
(87) Numéro de publication internationale: WO 2006/095088

(56) Documents cités:
- EP-A- 1 420 158
- WO-A-02/23032
- WO-A-02/095209
- WO-A1-2006/096750
- WO-A1-2006/096750
- CA-A1- 2 215 242
- DE-A1- 10 207 922
- DE-A1- 19 825 583
- FR-A- 2 724 976
- US-B1- 6 378 509

## Description

La présente invention concerne un dispositif de recirculation des gaz d'échappement utilisable notamment pour réinjecter dans le circuit d'admission d'un moteur thermique une partie des gaz d'échappement.

### ARRIERE PLAN DE L'INVENTION

Un dispositif de recirculation de gaz d'échappement d'un moteur thermique comprend généralement une vanne comportant un corps ayant une chambre dans laquelle au moins un conduit débouche par un siège en regard duquel s'étend un élément de régulation mobile entre une position d'obturation et une position de dégagement du conduit. Lorsque le moteur thermique est arrêté, l'élément de régulation est en position d'obturation en appui contre son siège. Il existe alors un risque que des particules, agglomérats et autres résidus contenus dans les gaz d'échappement ne viennent coller l'élément de régulation sur son siège. Il est alors nécessaire de disposer de moyens de déplacement de l'élément de régulation vers sa position de dégagement qui soient suffisamment puissants pour décoller l'élément de régulation de son siège.

Les documents DE 198 25 583 et WO 02/095209 décrivent par ailleurs chacun une vanne de recirculation de gaz d'échappement dont la soupape de régulation est commandée pour se tenir à l'écart de son siège pendant les phases d'arrêt du moteur thermique.

### OBJET DE L'INVENTION

Il serait donc intéressant de disposer d'un moyen pour éviter le collage de l'élément de régulation sur son siège.

### BREVE DESCRIPTION DE L'INVENTION

A cet effet, on prévoit, selon l'invention, un dispositif de recirculation de gaz d'échappement d'un moteur thermique, comprenant une vanne comportant un corps ayant une chambre dans laquelle au moins un conduit débouche par un siège en regard duquel s'étend un élément de régulation entraîné par un moteur entre une position d'obturation et une position de dégagement du conduit, l'élément de régulation étant monté mobile entre une position appliquée contre le siège et une position décollée du siège et la vanne comprenant des moyens de déplacement de l'élément de régulation entre sa position appliquée et sa position décollée, les moyens de déplacement comportant un organe de rappel de l'élément de régulation en position décollée lorsque le moteur thermique est arrêté.

Ainsi, lorsque le moteur thermique est arrêté, l'élément de régulation est rappelé en position décollée. Le collage de l'élément de régulation sur son siège est alors évité.

De préférence, l'élément de régulation est un disque percé d'un orifice de passage et monté dans la chambre pour pivoter entre la position d'obturation, dans laquelle le disque obture le conduit, et la position de dégagement, dans laquelle l'orifice de passage est en regard du conduit, le disque étant monté dans la chambre pour être mobile axialement entre la position décollée et la position appliquée.

La structure de la vanne est alors simple et compacte.

Avantageusement, les moyens de déplacement comprennent une bobine agencée pour attirer une partie solidaire du disque de manière à amener le disque de sa position décollée à sa position appliquée et, de préférence, l'organe de rappel est un ressort intercalé entre le corps et une partie solidaire du disque de manière à repousser le disque vers sa position décollée.

En variante, l'organe de rappel comprend un aimant permanent solidaire du disque pour attirer le disque vers sa position décollée.

D'autres caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 est une vue schématique d'un moteur thermique équipé d'un dispositif de recirculation des gaz d'échappement,
- la figure 2 est une vue en coupe axiale d'une vanne conforme à l'invention pour la première position de l'élément de régulation,
- la figure 3 est une vue analogue à celle de la figure 2 pour une deuxième position de l'élément de régulation,
- la figure 4 est une vue de dessus de la paroi formant le siège de l'élément de régulation,
- la figure 5 est une vue analogue à celle de la figure 3 d'une vanne selon une variante de réalisation.

### DESCRIPTION DETAILLEE DE L'INVENTION

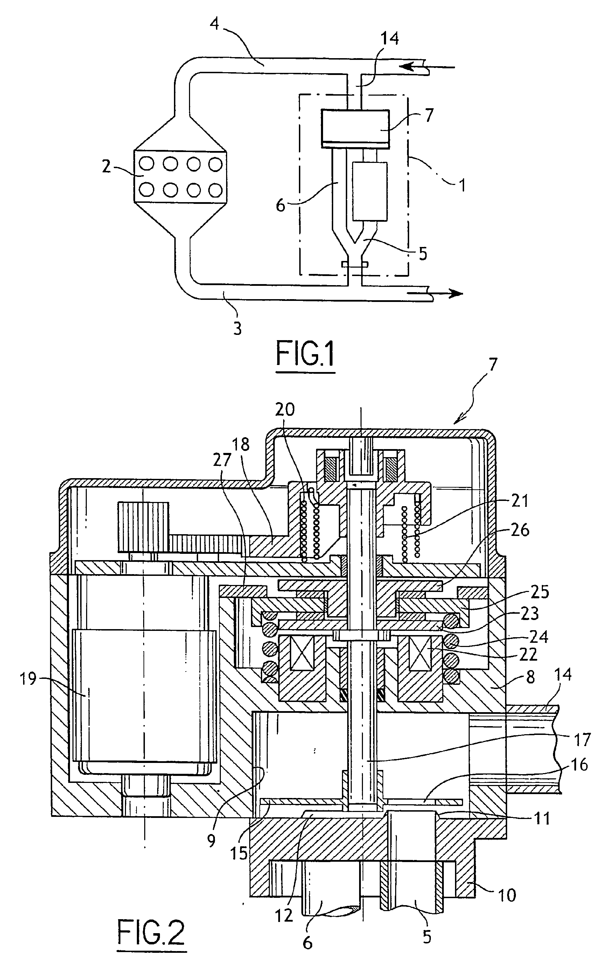

En référence à la figure 1, le dispositif de recirculation des gaz d'échappement, généralement désigné en 1, est destiné à équiper un moteur thermique 2 en étant raccordé, d'une part, au conduit 3 d'échappement des gaz brûlés et, d'une part, au conduit 4 d'admission d'air. Cet agencement est connu en lui-même.

Le dispositif de recirculation 1 comprend une voie refroidie 5 et une voie non refroidie 6 qui sont connues en elles-mêmes et qui sont raccordées d'une part au conduit d'échappement 3 et, d'autre part, au conduit d'admission 4 par l'intermédiaire d'une vanne 7.

En référence également aux figures 2 à 4, la vanne 7 comprend un corps 8 qui délimite une chambre 9 fermée par une bride 10 percée de conduits auxquels sont reliées des extrémités correspondantes des voies refroidie 5 et non refroidie 6. La bride 10 est fixée au corps 8 de manière amovible, par exemple au moyen de vis non visibles sur les figures, et forme une paroi de la chambre 9. La bride 10 comporte du côté de la chambre 9 une surface en saillie de laquelle s'étendent à 120° les unes des autres une première collerette 11 entourant le débouché de la voie refroidie 5, une collerette 12 entourant le débouché de la voie non refroidie 6 et une collerette 13 borgne. Les collerettes 11, 12 et 13 sont identiques.

La chambre 9 est reliée au conduit d'admission 4 par un conduit de liaison 14 débouchant dans la chambre 9.

La chambre 9 reçoit un élément de régulation de débit formé d'un disque 15 percé d'un orifice de passage 16 de section comparable à celle des voies refroidie 5 et non refroidie 6. Le disque 15 s'étend en regard des collerettes 11, 12, 13 et de la bride 10. Le disque 15 est solidaire d'une extrémité d'un arbre 17 dont une extrémité opposée est solidaire d'un secteur denté 18 entraîné en rotation par l'intermédiaire d'un moteur électrique 19 ici à courant continu.

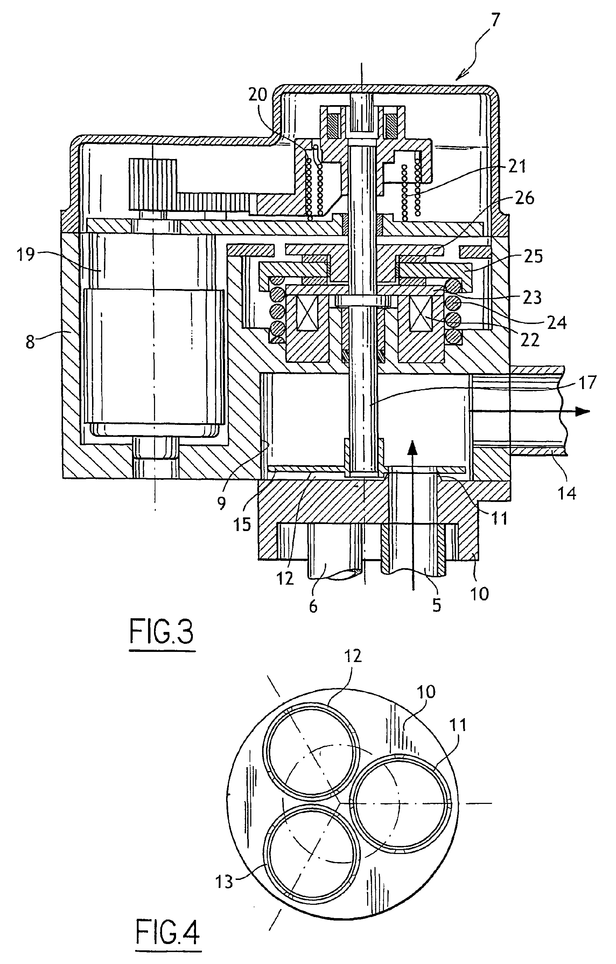

Le disque 15 peut ainsi être entraîné en rotation entre deux positions extrêmes, à savoir :
- une première position extrême (représentée aux figures 2 et 3) dans laquelle l'orifice de passage 16 s'étend en regard de la collerette 11 et donc de la voie refroidie 5 (le disque 15 dégage alors la voie refroidie 5 et obture la voie non refroidie 6), et
- une deuxième position extrême (non représentée) dans laquelle l'orifice de passage 16 se trouve en regard de la collerette 12 et donc de la voie non refroidie 6 (le disque 15 dégage alors la voie non refroidie 6 et obture la voie refroidie 5).

Entre ces deux positions extrêmes, le disque 15 possède une position intermédiaire (non représentée) dans laquelle l'orifice de passage 16 se trouve en regard de la collerette 13, le disque 15 obturant les voies refroidie 5 et non refroidie 6. Les deux positions extrêmes et la position intermédiaire sont à 120° les unes des autres. Cet agencement à 120° permet pour un encombrement donné de disposer de la plus importante section de passage.

La vanne 7 comprend un élément de rappel du disque 15 en position intermédiaire. L'élément de rappel comprend deux ressorts de torsion 20, 21, hélicoïdaux et coaxiaux à l'arbre 17, ayant chacun une extrémité reliée au secteur denté 18 et une extrémité reliée au corps 8 pour exercer sur le secteur denté 18 et donc sur le disque 15 des couples de rappel opposés.

L'arbre 17 est reçu dans le corps 8, non seulement à pivotement, mais également à coulissement de telle manière que le disque 15 soit mobile entre deux positions axiales, à savoir :
- une première position (représentée à la figure 3) dans laquelle le disque 15 est appliqué contre les collerettes 11, 12, 13, les collerettes 11, 12, 13 formant le siège du disque 15, et
- une deuxième position (représentée à la figure 2) dans laquelle le disque 15 est décollé des collerettes 11, 12, 13.

La vanne 7 comprend des moyens de déplacement du disque 15 entre sa position appliquée et sa position décollée.

Les moyens de déplacement comprennent une bobine 22 fixée sur le corps 8 de manière coaxiale à l'arbre 17 pour s'étendre en regard d'un plateau 23 en matériau magnétique solidaire en translation de l'arbre 17. La bobine 22 est reliée à des moyens d'alimentation en énergie électrique non représentés de telle manière que lorsque la bobine 22 est alimentée, elle attire le plateau 23 et déplace l'arbre 17 et le disque 15 vers la position appliquée du disque 15.

Les moyens de déplacement comprennent également un organe de rappel du disque 15 en position décollée. L'organe de rappel comprend un ressort hélicoïdal de compression 24 qui est disposé coaxialement à l'arbre 17 entre le corps 8 et un plateau 25 fixe en translation et libre en rotation par rapport à l'arbre 17. En l'espèce, le plateau 25 est monté libre en rotation sur une douille 26 épaulée solidaire de l'arbre 17 et prend appui axialement sur l'épaulement de la douille 26 et sur le plateau 23 par des patins de glissement ou des butées à aiguilles. Le ressort 24 repousse le plateau 25 contre une butée 27 solidaire du corps 8. La butée 27 définit la position décollée du disque 15.

Le fonctionnement de la vanne va maintenant être décrit.

Lorsque le moteur thermique 2 n'est pas en fonctionnement, le moteur électrique 19 et la bobine 22 ne sont pas alimentés. Le ressort 24 maintient le disque 15 en position décollée et les ressorts de torsion 20, 21 maintiennent le disque 15 en position intermédiaire.

La gestion de la recirculation des gaz d'échappement est assurée de façon connue en elle-même par l'unité de contrôle moteur, ou une unité dédiée connue en elle-même, à laquelle est relié le moteur électrique 19 et au moins indirectement la bobine 22.

Lorsque le moteur thermique 2 est dans une phase de recirculation des gaz d'échappement, le moteur électrique 19 est commandé de manière à amener le disque 15 vers l'une ou l'autre de ses deux positions extrêmes selon que la voie refroidie 5 ou la voie non refroidie 6 doit être raccordée au conduit d'admission 4 par le conduit de liaison 14. On comprend que, lorsque le disque 15 est dans l'une de ses deux positions extrêmes, il assure un débit maximum puisque l'orifice de passage 16 se trouve complètement en regard de l'une des deux voies 5, 6. En revanche, lorsque le disque 15 se trouve entre sa position intermédiaire d'obturation et l'une de ses positions extrêmes, l'orifice de passage 16 se trouve seulement partiellement en regard de l'une des deux voies de sorte que le disque 15 masque une partie de cette voie. Le disque 15 réduit ainsi la section de passage du flux de gaz d'échappement issu de la voie en question et permet alors une régulation du débit.

On notera que le disque 15 étant en position décollée lorsque le moteur thermique est en phase de recirculation, il subsiste une fuite au niveau du débouché de la voie en regard de laquelle le disque 15 s'étend pour l'obturer. Cette fuite a un débit négligeable.

Lorsque le disque 15 pivote entre ses positions extrêmes, il n'est pas appliqué contre les collerettes 11, 12, 13. Ceci permet de limiter le frottement et donc l'usure des pièces en contact. La détection de la position angulaire du disque 15 est réalisée de manière classique.

En dehors des phases de recirculation des gaz d'échappement, le moteur électrique 19 amène le disque 15 dans sa position intermédiaire et la bobine 22 est alimentée et maintient le disque 15 en position appliquée.

Pour déplacer le disque 15 entre ses différentes positions angulaires en cas de retour en phase de recirculation, l'alimentation de la bobine 22 est préalablement coupée de manière que le ressort 24 puisse amener le disque 15 en position décollée puis le moteur électrique 19 est alimenté pour déplacer le disque 15 dans la position recherchée.

La présence des collerettes 11, 12, 13 permet de simplifier la réalisation d'une étanchéité entre le disque 15 et le siège de celui-ci et d'équilibrer les efforts qui s'exercent sur le disque 15 lorsque celui-ci est en position appliquée.

La vanne 7 assure une double fonction de régulation de débit et de sélection de la voie 5, 6 raccordée au conduit 14. En outre, le disque 15 étant déplacé dans un plan perpendiculaire au flux des gaz d'échappement, les moyens de déplacement du disque 15 ne supportent que de façon limitée les efforts exercés sur le disque 15 par les gaz d'échappement sous pression.

Lorsque le moteur thermique 2 est arrêté, l'alimentation de la bobine 22 est coupée de sorte que le ressort 24 repousse le disque 15 en position décollée. Il est ainsi évité que des particules ou agglomérats contenus dans les gaz d'échappement ne viennent coller le disque 15 sur la bride 10.

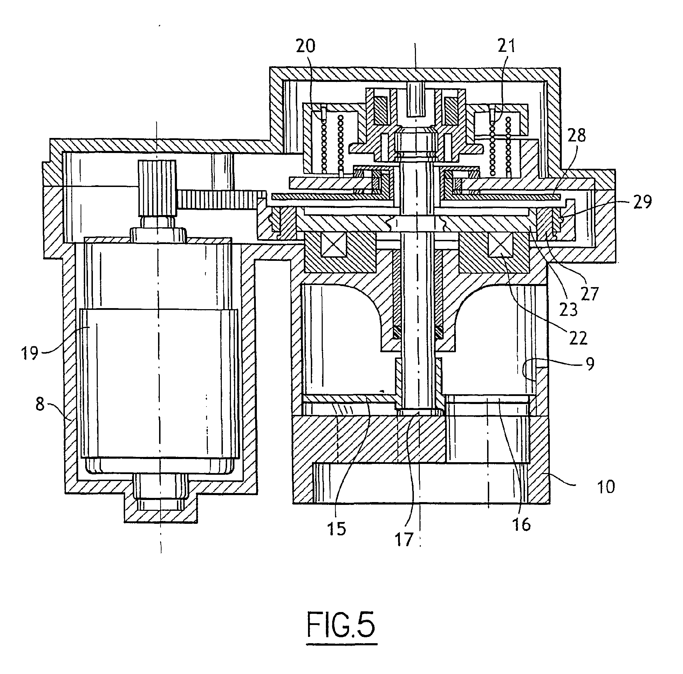

Selon une variante représentée à la figure 5, l'organe de rappel du disque 15 en position décollée comprend un aimant permanent 27, de forme circulaire, fixé en périphérie du plateau 23 en regard d'une platine magnétique 28 fixe en translation et libre en rotation par rapport au corps 8. La platine magnétique 28 est coaxiale à l'arbre 17 et est fixée au corps 8 par un palier de guidage en rotation et des butées axiales à aiguilles. Le plateau 23 est en matériau magnétique.

L'aimant permanent 27 a un diamètre supérieur à celui de la bobine 22.

L'aimant permanent 27 est associé à une armature 29 de circulation du flux magnétique engendré par l'aimant permanent 27 de manière que l'aimant permanent 27 engendre une force d'attraction de la platine magnétique 28.

L'armature 29 comprend, de façon connue en soi, une section saturante restreignant le flux engendré par l'aimant permanent 27 de manière à limiter l'accroissement de la force d'attraction produite par l'aimant permanent 27 à mesure que l'aimant permanent se rapproche de la platine 28. Ceci facilite le déplacement du disque 15 par la bobine 22 lorsque celle-ci est alimentée pour déplacer le disque 15 en position appliquée contre les collerettes 11, 12, 13.

Ainsi, lorsque la bobine 22 est alimentée, elle attire le plateau 23 et amène le disque 15 en position appliquée. Lorsque l'alimentation de la bobine 22 est coupée, l'aimant permanent 27 attire la platine 28 et entraîne le disque 15 en position décollée.

La différence de diamètre entre l'aimant permanent 27 et la bobine 22 est telle que l'aimant permanent 27 et la bobine 22 sont écartés l'un de l'autre de manière que l'aimant permanent 27 ne soit que peu, ou pas, soumis au champ magnétique engendré par la bobine 22.

Dans cette variante, le secteur denté entraîné par le moteur électrique 19 est solidaire du plateau 23.

Les ressorts de torsion 20, 21, hélicoïdaux et coaxiaux à l'arbre 17, ont chacun une extrémité reliée à une partie solidaire en rotation de l'arbre 17 et une extrémité reliée au corps 8 pour exercer sur l'arbre 17 et donc sur le disque 15 des couples de rappel opposés.

Dans cette variante également, la surface de la bride 10 s'étendant du côté de la chambre 9 est lisse et le disque 15 possède trois collerettes en saillie (seules deux collerettes sont visibles sur la figure 5) : une collerette entourant l'orifice de passage 16 et deux collerettes borgnes.

Le fonctionnement de la vanne conforme à cette variante est identique à celui précédemment décrit.

Bien entendu, l'invention n'est pas limitée au mode de réalisation décrit et on peut y apporter des variantes de réalisation sans sortir du cadre de l'invention tel que défini par les revendications.

En particulier, l'élément de régulation pourrait avoir une structure différente de celle décrite et être par exemple constituée d'une plaque coulissante ou d'une soupape.

En outre, les voies 5 et 6 peuvent être raccordées directement à la chambre 9 par des embouts de connexion agencés extérieurement sur le corps 8.

Les collerettes 11, 12, 13 sont facultatives.

La vanne 7 peut être montée en amont des voies refroidie et non refroidie et non en aval comme représenté sur la figure 1.

En phase de recirculation, on peut prévoir d'amener le disque 15 en position appliquée une fois celui-ci dans la position angulaire recherchée raccordant une des voies au conduit 14 si l'on ne souhaite pas qu'existe une fuite sur l'autre voie. En cas de modification de la position angulaire, le disque 15 est préalablement décollé puis, après pivotement, ramené en position appliquée.

## Revendications

1. Vanne (7) pour dispositif de recirculation de gaz d'échappement d'un moteur thermique, ladite vanne comportant un corps (8) ayant une chambre (9) dans laquelle au moins un conduit (5, 6) débouche par un siège (11, 12) en regard duquel s'étend un élément de régulation (15) entraîné par un moteur (19) entre une position d'obturation et une position de dégagement du conduit, l'élément de régulation est monté mobile entre une position appliquée contre le siège et une position décollée du siège, la vanne comprend des moyens de déplacement (22, 24 ; 22, 27) de l'élément de régulation entre sa position appliquée et sa position décollée, les moyens de déplacement comportant un organe de rappel (24 ; 27) de l'élément de régulation en position décollée lorsque le moteur thermique est arrêté, **caractérisé en ce que** l'élément de régulation étant un disque (15) percé d'un orifice de passage (16) et monté dans la chambre (9) pour pivoter entre la position d'obturation, dans laquelle le disque obture le conduit (5, 6), et la position de dégagement, dans laquelle l'orifice de passage est en regard du conduit, le disque étant monté dans la chambre pour être mobile axialement entre la position décollée et la position appliquée.

2. Vanne selon la revendication 1, **caractérisé en ce que** les moyens de déplacement comprennent une bobine (22) agencée pour attirer une partie (23) solidaire du disque (15) de manière à amener le disque de sa position décollée à sa position appliquée.

3. Vanne selon la revendication 2, **caractérisé en ce que** l'organe de rappel est un ressort (24) intercalé entre le corps (8) et une partie (25) solidaire du disque (15) de manière à repousser le disque vers sa position décollée.

4. Vanne selon la revendication 2, **caractérisé en ce que** l'organe de rappel comprend un aimant permanent (27) solidaire du disque (15) pour attirer le disque vers sa position décollée.

5. Vanne selon la revendication 4, **caractérisé en ce que** l'aimant permanent (27) est associé à une armature (29) de circulation de flux comprenant une zone de réduction de flux agencée de manière que l'aimant permanent engendre une force inférieure à une force engendrée par la bobine (22).

6. Dispositif de recirculation de gaz d'échappement d'un moteur thermique comprenant une vanne selon l'une quelconque des revendications précédentes.

## Claims

1. Valve (7) for an exhaust gas recirculation device of a heat engine, said valve comprising a body (8) having a chamber (9) into which at least one duct (5, 6) opens through a seat (11, 12) opposite which extends a regulation element (15) driven by an engine (19) between a shut position and a release position of the duct, the regulation element being mounted to move between a position applied against the seat and a position lifted from the seat, the valve comprising displacement means (22, 24; 22, 27) for displacing the regulation element between its applied position and its lifted position, the displacement means comprising a return member (24; 27) for returning the regulation element to the lifted position when the heat engine is stopped, **characterized in that** the regulation element is a disc (15) pierced with a passage orifice (16) and mounted in the chamber (9) to pivot between the shut position, in which the disc shuts off the duct (5, 6), and the release position, in which the passage orifice is facing the duct, the disc being mounted in the chamber to be axially mobile between the lifted position and the applied position.

2. Valve according to Claim 1, **characterized in that** the displacement means comprise a coil (22) arranged to attract a part (23) attached to the disc (15) so as to bring the disc from its lifted position to its applied position.

3. Valve according to Claim 2, **characterized in that** the return member is a spring (24) inserted between the body (8) and a part (25) attached to the disc (15) so as to push back the disc towards its lifted position.

4. Valve according to Claim 2, **characterized in that** the return member comprises a permanent magnet (27) attached to the disc (15) to attract the disc towards its lifted position.

5. Valve according to Claim 4, **characterized in that** the permanent magnet (27) is associated with a flux circulation armature (29) comprising a flux reduction region arranged so that the permanent magnet generates a force smaller than a force generated by the coil (22).

6. Exhaust gas recirculation device for a heat engine comprising a valve according to any one of the preceding claims.

## Patentansprüche

1. Ventil (7) für eine Abgasrückführungsvorrichtung eines Wärmemotors, wobei das Ventil einen Körper (8) aufweist, der eine Kammer (9) hat, in die mindestens eine Rohrleitung (5, 6) über einen Sitz (11, 12) mündet, dem gegenüber sich ein Regelungselement (15) erstreckt, das von einem Motor (19) zwischen einer Verschlussstellung und einer Freigabestellung der Rohrleitung angetrieben wird, wobei das Regelungselement zwischen einer auf den Sitz aufgelegten und einer vom Sitz abgehobenen Stellung beweglich montiert ist, wobei das Ventil Verschiebeeinrichtungen (22, 24; 22, 27) des Regelungselements zwischen seiner aufgelegten und seiner abgehobenen Stellung enthält, wobei die Verschiebeeinrichtungen ein Organ (24; 27) zur Rückstellung des Regelungselements in die abgehobene Stellung aufweisen, wenn der Wärmemotor abgeschaltet ist, **dadurch gekennzeichnet, dass** das Regelungselement eine Scheibe (15) ist, in die eine Durchgangsöffnung (16) gebohrt und die in die Kammer (9) eingebaut ist, um zwischen der Verschlussstellung, in der die Scheibe die Rohrleitung (5, 6) verschließt, und der Freigabestellung zu schwenken, in der die Durchgangsöffnung der Rohrleitung gegenüberliegt, wobei die Scheibe in die Kammer eingebaut ist, um zwischen der abgehobenen Stellung und der aufgelegten Stellung axial beweglich zu sein.

2. Ventil nach Anspruch 1, **dadurch gekennzeichnet, dass** die Verschiebeeinrichtungen eine Spule (22) enthalten, die eingerichtet ist, um einen fest mit der Scheibe (15) verbundenen Teil (23) anzuziehen, um die Scheibe von ihrer abgehobenen Stellung in ihre aufgelegte Stellung zu bringen.

3. Ventil nach Anspruch 2, **dadurch gekennzeichnet, dass** das Rückstellorgan eine Feder (24) ist, die zwischen den Körper (8) und einen fest mit der Scheibe (15) verbundenen Teil (25) eingefügt ist, um die Scheibe in ihre abgehobene Stellung zurückzudrücken.

4. Ventil nach Anspruch 2, **dadurch gekennzeichnet, dass** das Rückstellorgan einen Dauermagnet (27) enthält, der fest mit der Scheibe (15) verbunden ist, um die Scheibe in ihre abgehobene Stellung anzuziehen.

5. Ventil nach Anspruch 4, **dadurch gekennzeichnet, dass** der Dauermagnet (27) einem Anker (29) zur Magnetflusszirkulation zugeordnet ist, der eine Flussreduzierungszone enthält, die so eingerichtet ist, dass der Dauermagnet eine Kraft geringer als eine von der Spule (22) erzeugte Kraft erzeugt.

6. Vorrichtung zur Abgasrückführung eines Wärmemotors, die ein Ventil nach einem der vorhergehenden Ansprüche enthält.
